# EUROPEAN PATENT APPLICATION

(11) **EP 1 641 188 A1**
(43) Date of publication of application: **29.03.2006**
(21) Application number: 05255920.0
(22) Date of filing: 22.09.2005
(51) Int. Cl.: H04L 12/28, H04Q 7/38

(54) **Method of scheduling users in wireless communication networks**

(30) Priority: 27.09.2004 US 949518
(71) Applicant: LUCENT TECHNOLOGIES INC., Murray Hill, New Jersey 07974-0636 (US)
(72) Inventor: Jugl, Enrico, Nuremberg, 90409 (DE); Mueckenheim, Jens, D-90411, Nuremberg (DE); Schacht, Mirko, Allersburg, D-90584 (DE)
(74) Representative: Sarup, David Alexander

(57) **Abstract**

In a method of scheduling, one or more additional users of a group may be selected, to be simultaneously scheduled with a first user of the group that has already been scheduled. The selection of the one or more users may be made based on spatial information of the users in the group.

## Description

### BACKGROUND OF THE INVENTION

### Field of the Invention

The present invention is generally related to a method of scheduling users in wireless communication networks.

### Description of the Related Art

Channelization code limitation ("code limitation") within an UMTS terrestrial random access network (UTRAN) is now a well known problem. Code limitation may significantly influence the success (or failure) of offered network services, particularly in the packet-switched domain, where data services are offered on downlink shared channels (ordinary Downlink Shared Channel (DSCH), or high speed HS-DSCH when applying the High-Speed Downlink Packet Access (HSDPA) standard).

The HS-DSCH added under the HSDPA standard is a variable frame length resource. The length of the frame is referred to as the Transmit Time Interval (TTI), and may be selected based on the type of traffic supported and the number of supported users. Typically a TTI is 2 ms.

In general, since an DSCH/HS-DSCH may be shared between multiple users, a method of scheduling is required at the base station (BS) to provide services to all users. For example, users within a sector of a cell may be grouped within a TTI for purposes of scheduling. The scheduler typically implements a scheduling algorithm that establishes an order or sequence in which to schedule the users for transmission. For example, it is known for the scheduler to establish a service metric value, Sₖ, for each user based on certain quality of Service (QoS) criteria. QoS is a general term that may represent a number of different requirements. As a basic tenant, QoS may be indicative of providing guaranteed performance (e.g., such as a minimum/maximum data network throughput, a minimum delay requirement, a packet loss rate, and a packet download time, etc.) in a wireless communications system.

The Sₖ may represent the data history of the user, a channel state, user priority based on a subscribed to QoS class, etc. The scheduler may sort the Sₖ values; for example, from lowest to highest, to establish a scheduling priority for the users. The user associated with the lowest Sₖ may correspond to the highest priority user, to be scheduled first in that TTI.

The BS scheduler may apply various scheduling algorithms for determining the service metric value for each user. For example, an algorithm to generate a service metric value may combine one or more measurement values to derive a service metric value. Also, scheduling algorithms may sort or order the scheduling priority of the users in various ways. For example, such scheduling algorithms may include round robin scheduling, max data rate, proportional fair scheduling algorithms, etc. Thus, on these downlink shared channels, not all users can be served simultaneously, but rather scheduled in TTIs, and as discussed briefly above, several scheduling algorithms have been evaluated in an effort to efficiently schedule packet data so as to properly serve users, while fulfilling QoS requirements.

However, scheduling users of packet data services on shared channels has become complicated. For example, a first thought in UMTS was to service users that were capable of receiving data at the highest data rate. This unfortunately led to starvation of users on the fringes of cells. Further, when several shared channels co-exist, mutual interference is introduced between the channels, and each channel occupies valuable code resources. Thus, there is a serious problem with code limitation on co-existing downlink shared channels. In other words, there may be insufficient code resources available if several data users are simultaneously scheduled by the scheduling entity at the BS to receive a transmission from the network. This may be a pronounced problem depending on the types (or classes) of services requested by the users of a given sector of a cell. Code limitation or code starvation may cause substantial delay for packet users, leading to network inefficiencies and possible reduction in capacity.

For example, there are many different QoS classes of service. Some of these services in the circuit-switched domain, such as voice and streaming video, do not utilize the shared channels, but users who have requested these services are assigned permanent channelization codes that cannot be "shared" with other users. In the packet-switched domain, the scheduler schedules those users requesting data services, but the scheduler may be severely limited in that certain channelization codes are no longer available, depending on the loading of the network and the mixture of services requested by the users in a given sector or cell (as an example, due to the high number of voice users being assigned permanent channelization codes for the duration of the voice users' connection). This may reduce network efficiency and capacity, causing delay for packet users in one or more sectors or in one or more cells. Accordingly, overcoming the code limitation problems in scheduling users of data packet services is an important focus of network designers.

### SUMMARY OF THE INVENTION

An exemplary embodiment of the present invention is directed to a method of scheduling. In the method, one or more additional users of a group may be selected, to be simultaneously scheduled with a first user of the group that has already been scheduled. The selection of the one or more users may be made based on spatial information of the users in the group.

### BRIEF DESCRIPTION OF THE DRAWINGS

The exemplary embodiments of the present invention will become more fully understood from the detailed description given herein below and the accompanying drawings, wherein like elements are represented by like reference numerals, which are given by way of illustration only and thus are not limitative of the exemplary embodiments of the present invention.

FIG. 1 illustrates an exemplary distribution of users with an exemplary 120° sector of a cell.

FIG. 2 is a flow diagram for describing a method of scheduling users in accordance with an exemplary embodiment of the present invention.

FIG. 3 is a flow chart illustrating the selection of additional users to be scheduled in further detail.

### DETAILED DESCRIPTION OF THE EXEMPLARY EMBODIMENTS

Although the principles of the exemplary embodiments of the present invention may be particularly well-suited for wireless communication systems based on UMTS technologies, standards and techniques, and may be described in this exemplary context, it should be noted that the exemplary embodiments shown and described herein are meant to be illustrative only and not limiting in any way. For example, the exemplary embodiments of the present invention are also applicable to other radio networks and/or developing wireless communication systems such as developing fourth generation (4G) wireless communication systems. As such, various modifications will be apparent to those skilled in the art for application to other wireless communication systems and are contemplated by the teachings herein.

Where used below, the term user may be considered synonymous to, and may hereafter be occasionally referred to, as a mobile station, mobile, mobile user, user equipment (UE), subscriber, user, remote station, access terminal, etc., and may describe a remote user of wireless resources in a wireless communication network. The term base station may be considered synonymous to and/or referred to as a base transceiver station (BTS) or NodeB, and may describe equipment that provides data and/or voice connectivity between a network and one or more users. A system or network (such as an access network) may include one or more base stations.

In general, exemplary embodiments of the present invention may be directed to a method of scheduling users by utilizing beam forming technologies to assist in scheduling users so as to overcome the problem of code limitation. In an aspect, the exemplary methodology described hereafter may permit code reuse on co-existing downlink shared channels in an effort to avoid the code limitation problem. Codes may be shared by multiple users by spatially separating the users within a group. Therewith, mutual interference may be spatially suppressed and the code resource can be reused, or shared between the simultaneously scheduled users. Accordingly, the exemplary methodology considers spatial information about the users in a scheduling pool in order to schedule spatially separable users to simultaneously receive a transmission from the network during a given TTI.

Beamforming technologies employing smart antennas may be used to spatially separate users of a group who are to be simultaneously scheduled in a given TTI. A base station typically employs one of two types of beam forming: fixed beamforming and adaptive beamforming. In a fixed beamforming strategy, the base station uses a number of preformed antenna beams to cover the area of cell. Each mobile station is assigned to one of the preformed beams. However, a base station using fixed beamforming may suffer from performance degradation due to interference when a plurality of scheduled mobile stations are assigned to a same one of the beams.

Accordingly, an adaptive beamforming strategy is utilized to separate users in the spatial domain, which may be referred to as an application of the spatial division multiple access (SDMA) principle. SDMA is a medium access technique, which can be used in a wireless network similar to the well-known FDMA or TDMA principle. While in FDMA the users are selected by their frequency, or in TDMA the users are accessed in separate time-slots, in SDMA the users are separated by their different location. In adaptive beamforming, the base station provides an individual transmit beam for each user; namely, as many beams as mobile stations are formed. This approach provides gains, such as in signal-to-noise ratio and therefore throughput, when the mobile stations are separated by a certain angular distance. Adaptive beamforming is user-specific and configured to maximize received uplink signal power while maintaining the total interference due to intra-, inter-cell interference and thermal noise.

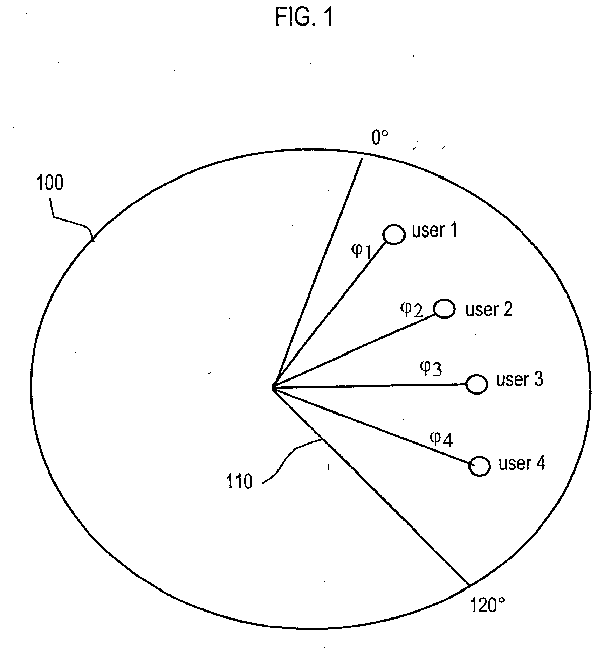

FIG. 1 illustrates an exemplary distribution of users with an exemplary 120° sector of a cell. In the exemplary embodiments, the antenna array at the base station may be comprised of N antenna elements. For purposes of explanation only, the number of antenna elements, N_{AE,} may be represented as four (4), it being understood that the exemplary methodology is applicable to an antenna array having greater than or fewer than four antenna elements.

Additionally as shown in FIG. 1, for example, the exemplary methodology described hereafter refers to a single sector 110 of a cell 100. The sector 110 may include a group of users, here shown as users 1-4, it being understood that the group may include greater or fewer than four users. The antenna array at the BS is deployed with a number of antenna elements in the cell100, the number of degrees of freedom of the antenna array at the BS is higher than the number of users in the group to be spatially separated at a time.

FIG. 1 also shows exemplary incidence angle of arrivals, ϕₖ, for the four users of the exemplary group. From the uplink, these incident angles ϕₖ of the user signals with respect to the sector border (at 0°) may be known in advance by the beamformer or antenna array processor at the BS, for example. Additionally, for the purposes of the following explanation, the - angular dispersion of the incoming user signals is assumed to be relatively narrow, i.e. the angular spread is small (e.g. rural environments). The exemplary methodology would function for larger angular spreads, but then the number of users spatially separated group could shrink, as several degrees of freedom of the array need to be used to separate users.

In an example, the number of array elements (N_{AE}) comprising the antenna array at the BS may be N_{AE} = 4, although an antenna array may be comprised of greater than four array elements. The number of array elements employed in the antenna array at the BS may depend on a number of factors, including, but not limited to, cost, geography, population densities, industry standards and public acceptance, for example. In beamforming, transmit power from the antenna array is directed or focused toward one user in a certain direction (known as a main lobe), and minimized in other directions, known as spatial nulls. The number of spatial nulls for an antenna array is equal to N_{AE}-1. For example, in an array of four elements, the main lobe directed to one user in a sector of a cell would have 4x the antenna gain of an individual antenna element, and there would be three spatial nulls directed to other areas in the sector where no power is transmitted to.

In order for users to be spatially separated or "spatially orthogonal" so as to be simultaneously scheduled, there needs to be a sufficient angular distance between users. Scheduled users may suffer performance degradation if there is not a sufficient angular distance between users. This is illustrated using an example of two users in a sector, UE1 and UE2. If UE2 is sitting in the spatial null of UE1 and the antenna array (main lobe) is directed to UE2 , UE2 may not receive any power from the transmission signal due to interference from UE1, since UE2 is in the spatial null of UE1. Thus, when two users have the same or substantially close incident angles of arrival, it is difficult for the BS to transmit to one user while eliminating another user. Thus, a certain minimum angular distance between users may ensure that two or more users may be spatially separable so as to be simultaneously scheduled in a given TTI for receiving a transmission from the BS over the DSCH or respective HS-DSCH, without performance degradation.

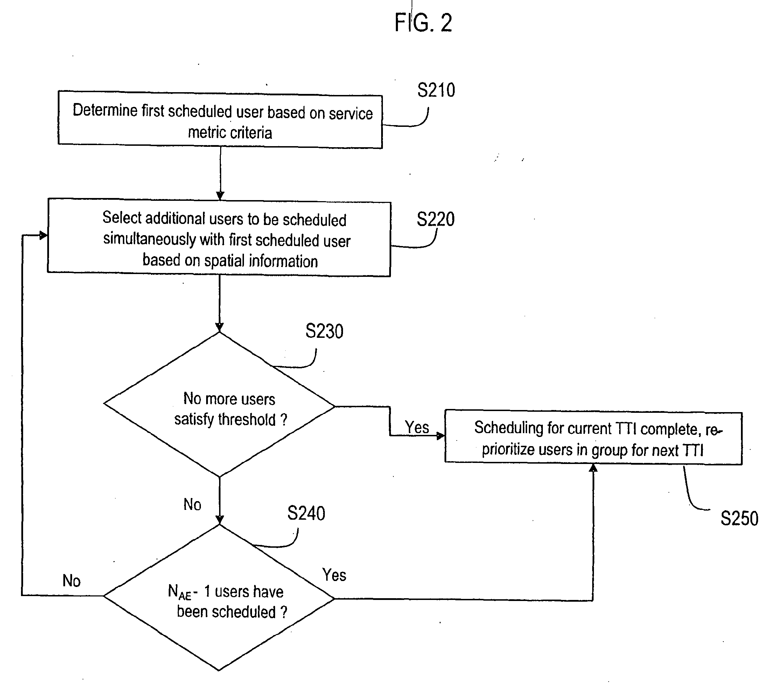

FIG. 2 is a flow diagram for describing a method of scheduling users in accordance with an exemplary embodiment of the present invention. Initially, for simultaneously scheduling users to receive a transmission within a given TTI, processing circuitry of the scheduling entity at the base station may determine a first scheduled user (S21 0) from the group. The determination of the first scheduled user may be based on a service metric criteria. However, this determination of the first scheduled user does not include analyzing spatial information.

For example, a QoS metric Sₖ may be evaluated for every user by a scheduling entity at the BS. The scheduling entity may implement one of a plurality of known scheduling algorithms to determine the QoS metric Sₖ for each user and order or prioritize users based on this metric. For example, the lower the Sₖ value for a user k, the higher the urge for that user be scheduled. Table 1 illustrates exemplary user information tracked by the scheduling entity, which may include the incidence angle of arrivals, ϕk, for the users and the respective service metric values.

**Table 1: Table of user information**

| **User** | **QoS** criteria | **Incident Angle** |
|---|---|---|
| **1** | S₁ | ϕ₁ |
| **2** | S₂ | ϕ₂ |
| ... | ... | ... |
| **K** | S_{K} | ϕ_{K} |

According to the QoS criteria the first user #j to be scheduled in the TTI (hereafter 'current TTI') may be chosen from the group of users within the sector 110, which has the lowest Sₖ, i.e. j= arg (minₖSₖ).

There are many possible choices for the scheduling algorithm that is used to determine the first scheduled user in a given TTI. A common factor for any scheduling algorithm chosen, and for the exemplary methodology, is that spatial information is not taken into account when scheduling the first user for receiving a transmission from the network. In other words, for a given transmission time interval (TTI), the highest priority or first scheduled user is based on certain QoS criteria (i.e., the Sₖ value) determined by the scheduling entity, and not based on any spatial data associated with that user or other users in the group.

One of the simplest scheduling algorithms which may be implemented for prioritizing users for scheduling based on their Sₖ value is commonly referred to as round robin (RR) scheduling. Round robin scheduling is classic time division multiplexing, where the delay between successive transmissions to the same user is fixed and equal for all users. A round robin scheduler runs autonomously and does not require any feedback in the form of channel state information. In contrast, max-rate scheduling, which always transmits to the user that is capable of receiving at the highest data rate, yields the highest possible system throughput, but ignores fairness and delay concerns.

Another scheduler, the proportional fair (PF) scheduling algorithm, may be implemented to schedule users which have a maximum data rate channel requested-to-average throughput ratio, (DRCi(n)/Ri(n)), which is also referred to as the priority weight of each user. The PF algorithm explores a multiplexing gain from multiple users, and at the same time serves users in what is called a "proportional fair" sense. The PF algorithm tends to equalize the DRCᵢ(n)/Rᵢ(n) ratio among users. As a result, the average user throughput will be "proportional to" the DRC rate a user has requested, or Rᵢ is proportional to DRCᵢ. In other words, a user having reasonably good channel conditions may achieve a reasonably good throughput, whereas a user with poor channel conditions has a poor throughput. These are merely exemplary scheduling algorithms that could be used for ordering or prioritizing users based on their Sₖ value to determine the first user to be scheduled in a given TTI.

Referring again to FIG. 2, the second (i-th) user (and additional i-th users in the group) may be selected (S220) to be scheduled with the first scheduled user in the current TTI according to the spatial information; i.e., the ϕₖ of each of the users may be evaluated. Adaptive beamforming may be employed to generate the spatial information of the users. The adaptive beamforming strategy used may be any known adaptive beamforming technique, such as is described in the article by Schacht et al. entitled "System Capacity from UMTS Smart Antenna Concepts", Proc. IEEE Vehicular Technology Conference(VTC) - Orlando, USA, pp. 3126-3130, (October 2003). The number of users to be spatially insulated (filtered) so as to be simultaneously scheduled depends on the number of antenna elements in the antenna array, and that a certain minimum angular distance threshold between users should be met to preserve antenna gains and achieve proper insulation.

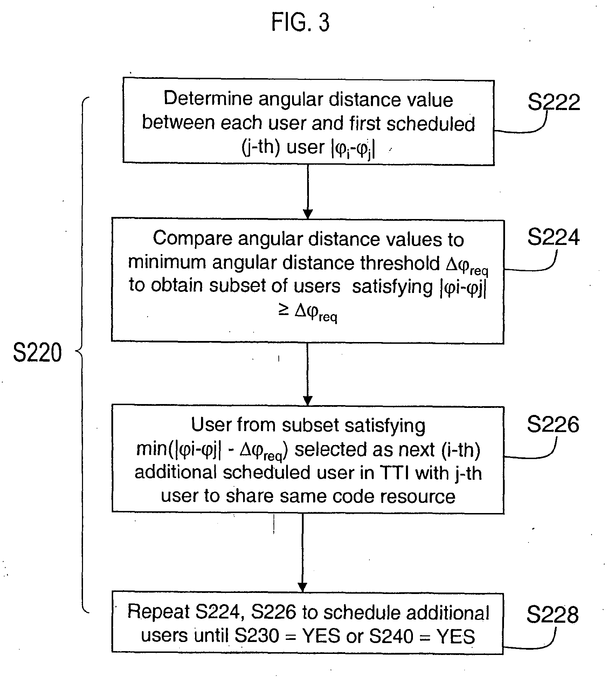

For example, and assuming a 120° sector, a 4-antenna element array may be able to spatially separate three (3) users therein. The spatial information for each user thus includes the incidence angle of arrival of a transmission signal to the user with respect to a 0° sector border of the sector. This data may be known or determined by the beamformer or array processing circuitry at the BS. The selection of one or more additional users to be scheduled with the first scheduled user in the current TTI is described in further detail with respect to FIG. 3.

In any event, the evaluation of the spatial information for each user must satisfy the aforementioned threshold (S230) in order for that i-th user to be scheduled with the first (j-th) scheduled user in the TTI. As will be described in more detail below, this threshold is related to a minimum angular distance between users. If no users satisfy the threshold, the first scheduled user is the only scheduled user in the current TTI and scheduling is complete (S250). If one or more users satisfy the threshold, then it is checked (S240) whether the maximum limit (N_{AE} -1) of users has been scheduled for that TTI. If so, (output of S240 is 'YES') then the scheduling of users in the current TTI is complete. Otherwise, additional users may be selected for scheduling until the output of step S230 or S240 is 'YES', i.e., no more users in the group satisfy the threshold or the maximum users in that TTI have been scheduled. The users of the group in sector 110 may be re-prioritized in the next TTI as is known, with the scheduled users in the current TTI being the lowest priority users in the next TTI, and those non-scheduled users in the group from the current TTI moving up in priority.

FIG. 3 is a flow chart illustrating the selection of additional users to be scheduled in further detail. Referring to FIG. 3, an angular distance value Δϕ = |ϕᵢ-ϕⱼ| for each user may be determined (S222). This may be determined by beamformer or array processing circuitry at the BS and/or by the scheduling entity at the BS, for example. As discussed above, the user information tracked by the scheduling entity includes the incidence angle of arrivals, ϕₖ, for the users. The angular distance value represents a difference between the i-th user's known incidence angle of arrival and a known incidence angle of arrival of the first scheduled user (the j-th user).

As discussed above, a certain minimum angular distance threshold between users should be met to preserve antenna gains and achieve proper insulation. For practical reasons a certain minimum angular distance threshold Δϕ=|ϕᵢ-ϕⱼ|≥Δϕ_{req} is required in order to obtain desired insulation and antenna gains. Principally, the higher the angular distance between two users *i* and *j*, the better the insulation. This threshold, Δϕ_{req}, may be set based on the angular size of the sector and a number of antenna elements, N_{AE}, used within an antenna array of a base station serving the group. In a standard sector environment (120°-sectors), i.e., Δϕ_{req}= 1200°/N_{AE}.

Accordingly, the angular distance values (Δϕ's) for each of the users may be compared (S224) to the minimum angular distance threshold, Δϕ_{req}, to determine a subset of users that may be candidates for spatial separation and code reuse within the current TTI, so as to be scheduled simultaneously with the first scheduled user. Users with Δϕ ≥ Δϕ_{req} may share the same code resource, since there is sufficient insulation. Therefore the second or i-th user may be chosen from the subset of users with |ϕᵢ-ϕⱼ|> Δϕ_{req}. Since other users are to be scheduled after the i-th user, the user in the subset having the minimum angular distance Δϕ but greater than Δϕ_{req}, i.e., min(||ϕᵢ-ϕⱼ|-Δϕ_{req}|), may be selected (S226) as the i-th scheduled user, or next additional scheduled user in the TTI which may share the same code resource as the j-th user and hence be simultaneously scheduled to receive a transmission in the current TTI.

Additional users in the subset (or all users in the group) may be selected by repeating (S228) the comparing and selecting (S224, S226) as described above. In other words, all other users in the group may be selected (in either the current TTI or in a next or subsequent TTI after re-prioritization) to be scheduled as described with respect to the i-th user. This may be performed until N_{AE}-1 users have been scheduled in the given TTI (S240 = YES) or until there is no more users in the group that satisfy the threshold criterion (S230 = YES).

Accordingly, any additional users selected to be simultaneously scheduled with the first scheduled user in a given TTI may share the same code resource that is allocated to the first scheduled user. These selected users may thus be separated spatially from each other and from the first scheduled user in accordance with SDMA principles.

Therefore, in accordance with the exemplary embodiments, a network may consider spatial information of a group of users to determine a desired subset of users to schedule in a given TTI, so as to make the most efficient use of radio resources. Re-using a single code within the same cell for scheduling multiple users in a TTI may substantially reduce radio resource consumption in the network and prevent code blocking, since code-reuse may enable a sufficient amount of channelization codes to be available for various services. Obtaining total spatial separation of packet users within a cell using smart antennas and applying SDMA principles, for the purposes of scheduling users, may lead to substantial capacity and throughput enhancements for UMTS, and may lead to substantial delay reductions for packet users.

The exemplary embodiments of the present invention being thus described, it will be obvious that the same may be varied in many ways. For example, the functions in FIGS. 2 and 3 may be implemented in hardware and/or software. The hardware/software implementations may include a combination of processor(s) and article(s) of manufacture. The article(s) of manufacture may further include storage media, computer-readable media having code portions thereon that are read by a processor to perform the method, and executable computer program(s). The executable computer program(s) may include instructions to perform the described operations and the method. The computer executable(s) may also be provided as part of externally supplied propagated signals. Such variations are not to be regarded as a departure from the scope of the exemplary embodiments of the present invention, and all such modifications as would be obvious to one skilled in the art are intended to be included within the scope of the following claims.

## Claims

1. A method of scheduling, comprising:
selecting one or more additional users of a group to be simultaneously scheduled with a first user of the group that has already been scheduled, based on spatial information of the users in the group.

2. The method of claim 1, further comprising:
determining the first scheduled user based on a service metric criteria, wherein determining the first scheduled user does not include analyzing spatial information.

3. The method of claim 1, wherein
the group of users is within a sector of a cell, and
the spatial information for each user includes an incidence angle of arrival of a transmission signal to the user with respect to a 0° sector border of the sector.

4. The method of claim 3, wherein selecting further includes:
determining, for each user, an angular distance value between the incidence angle of arrival of the user and the incidence angle of arrival of the first scheduled user;
comparing the angular distance values to a minimum angular distance threshold to determine a subset of users whose angular distance value equals or exceeds the threshold; and
selecting a user from the subset that has the smallest angular distance value which still exceeds the threshold as a next user to be scheduled for receive a transmission with the first scheduled user.

5. The method of claim 4, wherein
the minimum angular distance threshold is set based on the angular size of the sector and a number of antenna elements, N_{AE}, used within an antenna array of a base station serving the group.

6. The method of claim 4, wherein the angular distance value for each user is determined as a difference between the user's incidence angle of arrival and an incidence angle of arrival of the first scheduled user.

7. The method of claim 4, further comprising:
repeating the comparing and selecting to schedule remaining users of the group until no other user satisfies the threshold.

8. The method of claim 4, further comprising:
repeating the comparing and selecting to schedule remaining users of the group until N_{AE}-1 users have been simultaneously scheduled.

9. The method of claim 1, wherein the one or more additional users selected to be simultaneously scheduled with the first scheduled user shares the same code resource allocated to the first scheduled user.

10. The method of claim 1, wherein each of the one or more additional users selected to be simultaneously scheduled with the first scheduled user are each separated spatially from each other and from the first scheduled user.
